# FASCICULE DE BREVET EUROPEEN

(11) **EP 3 985 362 B1**
(45) Date de publication et mention de la délivrance du brevet: **27.09.2023**
(21) Numéro de dépôt: 21203011.8
(22) Date de dépôt: 15.10.2021
(51) Int. Cl.: G01G 19/58

(54) **COLIS INTÉGRANT UN SYSTÈME DE PRISE DE POIDS**
PAKET MIT INTEGRIERTEM GEWICHTSERFASSUNGSSYSTEM
PACKAGE INCLUDING A WEIGHT READING SYSTEM

(30) Priorité: 19.10.2020 FR 2010713
(43) Date de publication de la demande: 20.04.2022
(73) Titulaire: PA.COTTE SA, 1009 Pully (CH)
(72) Inventeur: BLOT, Pierre, 44000 Nantes (FR); MAFFRE, Nicolas, 44700 Orvault (FR); MOURRAIN, Denis, 44120 Vertou (FR)
(74) Mandataire: reuteler & cie SA

(56) Documents cités:
- EP-A1- 2 711 109
- WO-A1-95/31700
- WO-A1-2008/144910
- JP-A- 2014 190 979
- US-A1- 2020 309 590
- US-B1- 7 161 097
- US-B1- 7 692 107

## Description

Le domaine de l'invention est celui de la logistique.

Plus précisément, l'invention concerne un colis intégrant des moyens de mesure de poids.

Le coût de transport d'un objet dépend généralement de son poids.

Plus particulièrement, plus un objet est lourd et plus son transport présentera un coût important.

Par ailleurs, les colis sont généralement conçus pour transporter des objets présentant un poids maximal selon la résistance mécanique du colis et/ou les critères de prise en charge par le transporteur.

Cela permet donc de pouvoir contrôler rapidement le bon affranchissement de du colis et notamment que le colis est suffisamment affranchi en fonction du poids de l'objet transporté.

En effet, en cas de sous affranchissement, le colis peut être bloqué par les services de livraison qui peuvent alors le retourner à l'expéditeur afin que celui-ci complète son affranchissement.

Dans un autre cas, le colis peut être acheminé jusqu'à son destinataire mais ce dernier devra s'acquitter de la somme de l'affranchissement manquant s'il veut prendre possession de son colis.

Il en résulte donc que la livraison du colis peut être ralentie.

En effet, lorsque le colis est retourné à l'expéditeur, le nouvel itinéraire devient alors rallongé par rapport à l'itinéraire initial. De même, lorsque le colis est tout de même livré à son destinataire, il est temporairement retenu par les services de livraison afin de calculer le montant de l'affranchissement manquant.

Une livraison ralentie du colis peut donc avoir un effet néfaste en terme d'écologie, notamment lorsque le colis est retourné à l'expéditeur puisque le bilan carbone de l'expédition dudit colis est accru.

Il est donc nécessaire de peser le colis pour éviter un tel retard dans sa livraison.

Dans un domaine voisin de celui de la logistique, à savoir celui de la bagagerie, des systèmes de mesure de poids des bagages ont été développées, comme divulguées dans les documents US7161097, US2020309590 et US7692107.

Ces systèmes permettent de peser un bagage pour connaître son poids afin de vérifier si un voyageur peut conserver son bagage avec lui ou s'il doit s'en séparer afin que celui-ci soit placé en soute d'un appareil de transport.

De tels systèmes sont généralement encastrés dans les bagages et son escamotables pour permettre leur utilisation lorsque cela est nécessaire et leur protection lorsqu'ils ne sont pas utilisés.

Pour cela, les capteurs de prise de poids sont montés dans des boîtiers qui sont mobiles par rapport à une structure, notamment une caisse, du bagage ou du colis.

La mobilité peut être assurée par un dispositif mécanique manuel, par exemple par une tringlerie, ou par un dispositif mécanique motorisé.

De tels systèmes permettent donc de protéger les capteurs pour que ceux-ci ne soient pas dégradés lorsqu'ils ne sont pas utilisés ou lorsque le poids du contenu du colis ou du bagage est au-delà de la capacité de mesure du capteur.

Toutefois, de tels systèmes présentent certains inconvénients.

Tout d'abord, ces systèmes sont encombrants et occupent un volume important qui empiète sur l'espace de stockage à l'intérieur de la caisse du colis ou du bagage.

De plus, la présence du dispositif mécanique permettant la mobilité représente un poids non négligeable qui augmente le poids du colis ou du bagage à vide et donc réduit sa maniabilité par un utilisateur.

L'invention a notamment pour objectif de palier les inconvénients de l'art antérieur.

Plus précisément, l'invention a pour objectif de proposer une solution intégrable à un colis, qui permette la prise de poids du colis et la protection du ou des capteurs de prise de poids que la solution comprend.

L'invention a également pour objectif de fournir une telle solution qui soit peu encombrante et n'empiète pas ou peu sur un volume de contenance du colis.

L'invention a de plus pour objectif de fournir une telle solution qui offre une mesure précise du poids du contenu du colis. Le document EP 2 711 109 A1 divulgue un pèse personne avec un système de prise de poids d'une précision similaire à la présente demande.

L'invention a en outre pour objectif de fournir une telle solution qui soit simple d'intégration et de mise en oeuvre dans un colis.

Des objectifs de l'invention sont atteints par un colis selon la revendication 1.

Dans la présente, on décrit un colis comprenant une caisse ayant un fond intégrant un système de prise de poids. Le système de prise de poids comprend :
- au moins un capteur de prise de poids ayant un arceau de fixation et une portion déformable portée par l'arceau ;
- au moins un boîtier dans lequel est logé le capteur, le boîtier comprenant une coque femelle de laquelle est solidaire l'arceau de fixation du capteur, et une coque mâle montée à coulissement dans la coque femelle et de laquelle est solidaire la portion déformable du capteur.

La coque mâle comprend au moins une butée d'enfoncement de la coque mâle dans la coque femelle.

La présence des butées de la coque mâle permet de limiter l'enfoncement de la coque mâle dans la coque femelle.

Cela a pour effet de conserver une déformation de la partie déformable du capteur dans le domaine de la déformation élastique de sorte que le capteur reste utilisable ultérieurement même si le poids du colis dans lequel il est intégré dépasse un poids maximal prédéterminé.

Cela permet alors de réaliser un empilement de plusieurs colis les uns sur les autres, sans que le poids des colis supérieurs ne détériore les capteurs du colis en bas de l'empilement.

Par ailleurs, en cas de chute du colis, la limitation de l'enfoncement de la coque mâle dans la coque femelle, bénéficie à l'intégrité du capteur dont la déformation reste dans le domaine élastique.

Avantageusement, la coque mâle comprend deux butées opposées l'une par rapport à l'autre, chaque butée s'étendant selon une ligne courbe.

L'utilisation de deux butées permet de mieux répartir l'effort exercé par la coque mâle sur la coque femelle, et notamment de pouvoir empêcher une dégradation ou dysfonctionnement du capteur par arcboutement de la coque mâle dans la coque femelle.

De préférence, la coque mâle présente au moins un plot de fixation, par au moins une vis, de la portion déformable du capteur, le plot étant situé entre les deux butées.

Le plot permet de pouvoir conserver une forme sensiblement plate au capteur lors de son installation dans le boîtier.

Pour faciliter l'assemblage du capteur dans le boîtier, la coque femelle présente au moins une ouverture située en regard de ladite au moins une vis fixant la portion déformable du capteur sur le plot de fixation de la coque mâle.

Le capteur peut alors être fixé à la coque mâle lorsque le boîtier est assemblé.

Préférentiellement, la coque femelle comprend deux fentes, opposées l'une par rapport à l'autre, dans chacune desquelles l'arceau de fixation du capteur prend place.

Le capteur est ainsi maintenu de manière lâche dans la coque femelle ce qui évite une sur-contrainte par fixation à la fois sur la coque femelle et sur la coque mâle.

Selon un aspect avantageux, la coque femelle présente une bordure périphérique portant des ergots faisant saillie vers l'extérieur de la coque femelle.

Les ergots permettent de maintenir en position le boîtier dans le système, lorsque le boîtier est intégré dans un colis.

Avantageusement, le système comprend un dispositif d'affichage et un calculateur, le calculateur étant paramétré pour transformer une donnée de déformation de la portion déformable du capteur en une valeur de poids à afficher sur le dispositif d'affichage.

Ainsi, les données issues du capteur sont traitées par le calculateur pour que ce dernier transmette une valeur de poids à afficher sur le dispositif d'affichage, et ainsi informer l'utilisateur du poids de son colis.

De préférence, le système comprend au moins trois boîtiers à chacun desquels est associé un capteur.

L'utilisation d'au moins trois boîtiers et donc d'au moins trois capteurs permet d'obtenir une mesure la plus précise possible du poids du colis.

Dans ce cas, le calculateur est avantageusement paramétré pour réaliser une moyenne des données de déformation de la portion déformable de chacun des capteurs pour générer la valeur de poids à afficher sur le dispositif d'affichage

Ainsi, la valeur de poids affichée sur le dispositif d'affichage sera précise, permettant par exemple de pouvoir connaître le coût d'affranchissement du colis en fonction de son poids.

L'invention concerne également un colis comprenant une caisse ayant un fond, caractérisé en ce que le fond intègre un système de prise de poids selon l'une quelconque des revendications précédentes, la coque mâle faisant saillie d'une surface externe du fond de la caisse.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
[Fig. 1] la figure 1 est une vue en perspective de dessous d'un colis comprenant un système de prise de poids selon l'invention ;
[Fig. 2] la figure 2 est une vue éclatée d'une partie du système de prise de poids selon l'invention ;
[Fig. 3] la figure 3 est une vue en coupe transversale d'une partie du système de prise de poids selon l'invention.

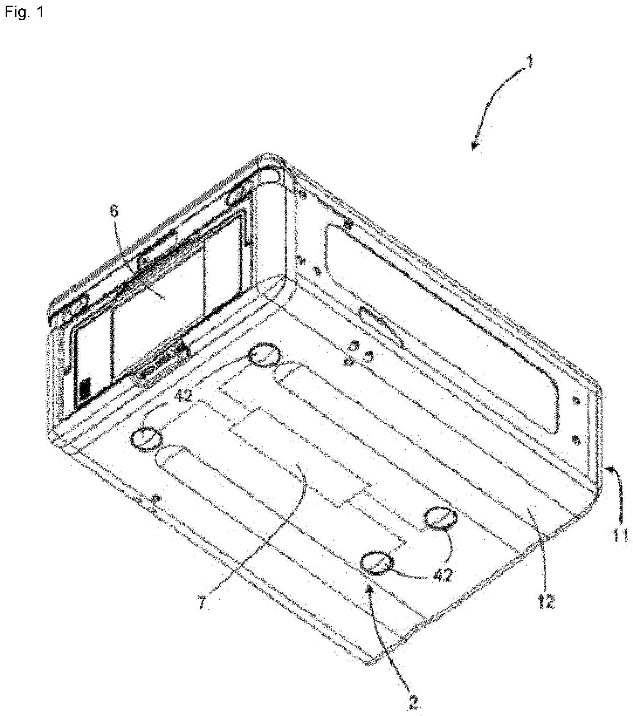

La figure 1 illustre un colis 1 comprenant un système 2 de prise de poids selon l'invention.

Le colis 1 comprend une caisse 11 ayant un fond 12 sur laquelle la caisse 11 peut reposer.

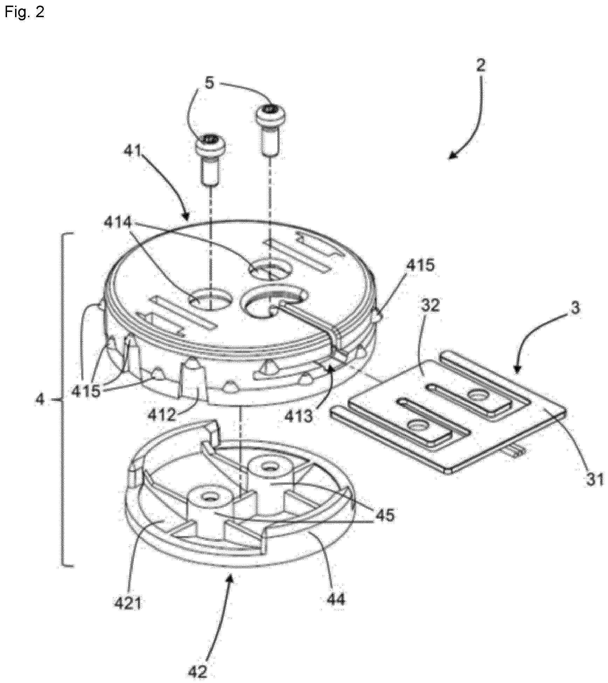

En référence à la figure 2, le système 2 de prise de poids comprend :
- au moins un capteur 3 de prise de poids ;
- au moins un boîtier 4 dans lequel est logé le capteur 3.

Tel qu'illustré sur la figure 2, le capteur 3 est de type capteur de déformation à lame et comprend un arceau 31 de fixation et une portion déformable 32 portée par l'arceau 31.

L'arceau 31 de fixation présente une forme de U à l'intérieur de laquelle est située la portion déformable 32.

Classiquement, la déformation de la partie déformable 32 par rapport à l'arceau 31 permet de pouvoir déterminer un poids du colis 1, comme expliqué ci-après.

Toujours en référence à la figure 2, le boîtier 4 comprend une coque femelle 41 et une coque mâle 42 montée à coulissement dans la coque femelle 41.

La coque femelle 41 comprend un fond 411 et une bordure périphérique 412 s'étendant depuis le fond 411. Le rebord périphérique présente avantageusement une section circulaire.

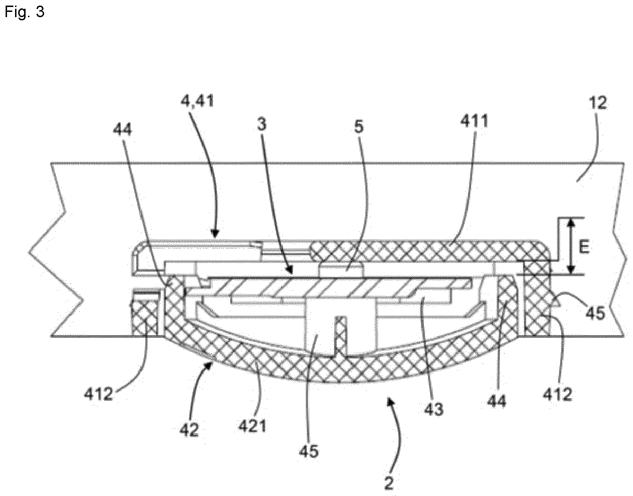

Le capteur 3 est destiné à être solidarisé à la coque femelle 41 par son arceau 31 de fixation tel qu'illustré sur la figure 3 notamment.

Pour cela, la coque femelle 41 comprend deux fentes 43, opposées l'une par rapport à l'autre, dans chacune desquelles l'arceau 31 de fixation du capteur 3 prend place.

Le capteur 3 est notamment inséré dans les fentes 43 par glissement au travers d'une lumière 413 pratiquée dans la bordure périphérique 412, la lumière 413 débouchant en regard des fentes 43.

La coque mâle 42 comprend une embase 421 et au moins une butée 44 d'enfoncement de la coque mâle 42 dans la coque femelle 41.

Plus précisément, la coque mâle 42 comprend deux butées 44 opposées l'une par rapport à l'autre, chaque butée s'étendant selon une ligne courbe. De préférence, la ligne courbe suivie par chacune des butées 44 est parallèle à la bordure périphérique 412 de la coque femelle 41.

La hauteur des butées est avantageusement déterminée pour limiter la déformation de la portion déformable 32 au domaine de la déformation élastique, comme expliqué ci-après.

En outre, la coque mâle 42 présente au moins un plot 45 de fixation pour permettre la fixation de la portion déformable 32 du capteur 3 sur la coque mâle 42.

La fixation de la portion déformable 32 est réalisée par au moins une vis 5.

Le plot 45 est avantageusement situé entre les deux butées 44 de la coque mâle 42.

Tel qu'illustré sur la figure 2, la coque mâle 42 comprend deux plots 45 pour assurer la fixation de la portion déformable 32 du capteur 3 par l'intermédiaire de deux vis 5.

Pour assurer la solidarisation de la portion déformable 32 du capteur sur les plots 45, la coque femelle 41 présente au moins une ouverture 414 située en regard des plots 45 de la coque mâle 42.

Plus particulièrement, la coque femelle 21 présente deux ouvertures 414 situées chacune en regard de l'un des plots 45 pour permettre le passage d'un outil tel qu'un tournevis pour la manipulation des vis 5 et la solidarisation de la portion déformable 32 du capteur 3 sur les plots 45.

Le système 2 de prise de poids est destiné à être intégré dans le colis 1 et plus précisément dans le fond 12 de la caisse 11 du colis1.

Plus précisément, le système 2 de prise de poids est destiné à être noyé dans le fond 12 de la caisse 11.

Pour cela, la coque femelle 41 présente, sur sa bordure périphérique 412, des ergots 415 faisant saillie vers l'extérieur de la coque femelle 41.

Les ergots 415 permettent de maintenir en position le boîtier 4 dans le fond 2 de la caisse 11, sans recours à un collage. La caisse 11 peut notamment être réalisée par moulage, le système 2 de prise de poids étant alors noyé dans le fond 12 de la caisse 11.

Ainsi, comme cela apparaît sur la figure 1, seule la coque mâle 42 fais saillie d'une surface externe du fond 12 pour permettre la prise de poids.

Toujours en référence à la figure 1, le système 2 de prise de poids comprend également un dispositif d'affichage 6 et un calculateur 7.

Le calculateur 7 est paramétré pour transformer une donnée de déformation de la portion déformable 32 du capteur 3 en une valeur de poids à afficher sur le dispositif d'affichage 6.

En référence à la figure 1, le système 2 de prise de poids comprend quatre boîtiers 4 à chacun desquels est associé un capteur 3.

De préférence, le système 2 comprend au moins trois boîtiers 4 à chacun desquels est associé un capteur 3. Le nombre de trois capteurs 3 permet d'obtenir une mesure la plus précise possible du poids du colis 1.

Le calculateur 7 est donc paramétré pour réaliser une moyenne des données de déformation de la portion déformable 32 de chacun des capteurs 3 pour générer la valeur de poids à afficher sur le dispositif d'affichage 6.

En référence à la figure 3, le fonctionnement du système 2 de prise de poids est à présent décrit.

Lorsque le colis 1 ne repose pas sur une surface, le capteur 3 tend à écarter la coque mâle 42 de la coque femelle 41.

Plus précisément, la portion déformable 32 du capteur est coplanaire à l'arceau 31 de fixation.

Il existe donc un écartement E entre les butées 44 et le fond 411 de la coque femelle 41.

Lorsque le poids du colis 1 est détecté, le colis 1 repose alors sur les coques mâles 42, ce qui a pour effet de déformer élastiquement la portion déformable 32 du capteur 3 par rapport à l'arceau 31.

L'écartement E tend alors à diminuer et le calculateur 7 est paramétré pour transformer la déformation de la portion déformable 32 en un poids à afficher sur le dispositif d'affichage 6.

Lorsqu'un poids maximal du colis 1 est atteint, les butées 44 viennent en appui contre le fond 411 de la coque femelle 41.

L'écartement E est alors nul.

Cela a pour effet de limiter la déformation de la partie déformable 32 du capteur 3 au domaine élastique.

Ainsi, même lorsque le poids du colis 1 est largement supérieur au poids maximal autorisé du colis 1, le capteur 3 est préservé et n'est pas abîmé.

Un message de dépassement du poids maximal peut alors être affiché par le dispositif d'affichage 6 via le calculateur 7.

Le système 2 de prise de poids selon l'invention permet donc de pouvoir assurer une prise de poids en toutes circonstances, ou quasiment, et notamment de pouvoir connaître la possibilité de transporter un objet dont le poids est au-delà de la limite prédéterminée (sa valeur précise n'étant alors pas connu) sans risque d'abîmer les capteurs 3.

En effet, si le poids de l'objet est supérieur au poids maximal autorisé par le colis 1, alors un message s'affichera en ce sens sur le dispositif d'affichage 6 pour informer l'utilisateur que le colis 1 n'est pas adapté.

En revanche, si le poids de l'objet est inférieur au poids maximal autorisé par le colis1, alors le poids de l'objet sera affiché sur le dispositif d'affichage 6 éventuellement accompagné d'un coût d'affranchissement.

## Revendications

1. Colis (1) comprenant une caisse (11) ayant un fond (12), **caractérisé en ce que** le fond (12) intègre un système (2) de prise de poids, le système (2) comprenant :
- au moins un capteur (3) de prise de poids ayant un arceau (31) de fixation et une portion déformable (32) portée par l'arceau (31) ;
- au moins un boîtier (4) dans lequel est logé le capteur (3), le boîtier (4) comprenant une coque femelle (41) de laquelle est solidaire l'arceau (31) de fixation du capteur (3), et une coque mâle (42) montée à coulissement dans la coque femelle (41) et de laquelle est solidaire la portion déformable (32) du capteur (3), la coque mâle (42) comprenant au moins une butée (44) d'enfoncement de la coque mâle (42) dans la coque femelle (41), la coque mâle (42 faisant saillie d'une surface externe du fond (12) de la caisse (11).

2. Colis selon la revendication 1, **caractérisé en ce que** la coque mâle (42) comprend deux butées (44) opposées l'une par rapport à l'autre, chaque butée (44) s'étendant selon une ligne courbe.

3. Colis selon la revendication précédente, **caractérisé en ce que** la coque mâle (42) présente au moins un plot (45) de fixation, par au moins une vis (5), de la portion déformable (32) du capteur (3), le plot (45) étant situé entre les deux butées (44).

4. Colis selon la revendication précédente, **caractérisé en ce que** la coque femelle (41) présente au moins une ouverture (414) située en regard de ladite au moins une vis (5) fixant la portion déformable (32) du capteur (3) sur le plot (45) de fixation de la coque mâle (42).

5. Colis selon l'une quelconque des revendications précédentes, **caractérisé en ce que** la coque femelle (41) comprend deux fentes (413), opposées l'une par rapport à l'autre, dans chacune desquelles l'arceau (31) de fixation du capteur (3) prend place.

6. Colis selon l'une quelconque des revendications précédentes, **caractérisé en ce que** la coque femelle (41) présente une bordure périphérique (412) portant des ergots (415) faisant saillie vers l'extérieur de la coque femelle (41).

7. Colis selon l'une quelconque des revendications précédentes, **caractérisé en ce qu'**il comprend un dispositif d'affichage (6) et un calculateur (7), le calculateur (7) étant paramétré pour transformer une donnée de déformation de la portion déformable (32) du capteur (3) en une valeur de poids à afficher sur le dispositif d'affichage (6).

8. Colis selon l'une quelconque des revendications précédentes, **caractérisé en ce qu'**il comprend au moins trois boîtiers (4) à chacun desquels est associé un capteur (3).

9. Colis selon la revendication 7 et la revendication 8, **caractérisé en ce que** le calculateur (7) est paramétré pour réaliser une moyenne des données de déformation de la portion déformable (32) de chacun des capteurs (3) pour générer la valeur de poids à afficher sur le dispositif d'affichage (6).

## Patentansprüche

1. Paket (1), umfassend eine Kiste (11) mit einem Boden (12), **dadurch gekennzeichnet, dass** der Boden (12) ein Gewichtserfassungssystem (2) integriert, wobei das System (2) umfasst:
- mindestens einen Gewichtserfassungssensor (3) mit einem Befestigungsbügel (31) und einem verformbaren Abschnitt (32), der von dem Bügel (31) getragen wird;
- mindestens ein Gehäuse (4), in dem der Sensor (3) untergebracht ist, wobei das Gehäuse (4) eine Aufnahmeschale (41) umfasst, mit der der Befestigungsbügel (31) des Sensors (3) fest verbunden ist, und eine Steckschale (42), die gleitend in der Aufnahmeschale (41) angebracht ist und mit der der verformbare Abschnitt (32) des Sensors (3) fest verbunden ist, wobei die Steckschale (42) mindestens einen Einsteckanschlag (44) der Steckschale (42) in die Aufnahmeschale (41) umfasst, wobei die Steckschale (42 aus einer äußeren Oberfläche des Bodens (12) der Kiste (11) hervorragt.

2. Paket nach Anspruch 1, **dadurch gekennzeichnet, dass** die Steckschale (42) zwei einander gegenüberliegende Anschläge (44) umfasst, wobei sich jeder Anschlag (44) gemäß einer gekrümmten Linie erstreckt.

3. Paket nach vorangehendem Anspruch, **dadurch gekennzeichnet, dass** die Steckschale (42) mindestens einen Zapfen (45) für die Befestigung mittels mindestens einer Schraube (5) des verformbaren Abschnitts (32) des Sensors (3) aufweist, wobei sich der Zapfen (45) zwischen den zwei Anschlägen (44) befindet.

4. Paket nach vorangehendem Anspruch, **dadurch gekennzeichnet, dass** die Aufnahmeschale (41) mindestens eine Öffnung (414) aufweist, die sich der mindestens einen Schraube (5) zugewandt befindet, die den verformbaren Abschnitt (32) des Sensors (3) auf dem Befestigungszapfen (45) der Steckschale (42) befestigt.

5. Paket nach einem der vorangehenden Ansprüche, **dadurch gekennzeichnet, dass** die Aufnahmeschale (41) zwei einander gegenüberliegende Schlitze (413) umfasst, in denen jeweils der Befestigungsbügel (31) des Sensors (3) platziert ist.

6. Paket nach einem der vorangehenden Ansprüche, **dadurch gekennzeichnet, dass** die Aufnahmeschale (41) einen Umfangsrand (412) aufweist, der Vorsprünge (415) trägt, die nach außerhalb der Aufnahmeschale (41) hervorragen.

7. Paket nach einem der vorangehenden Ansprüche, **dadurch gekennzeichnet, dass** es eine Anzeigevorrichtung (6) und einen Rechner (7) umfasst, wobei der Rechner (7) eingerichtet ist, um eine Verformungsangabe des verformbaren Abschnitts (32) des Sensors (3) in einen auf der Anzeigevorrichtung (6) anzuzeigenden Gewichtswert umzuwandeln.

8. Paket nach einem der vorangehenden Ansprüche, **dadurch gekennzeichnet, dass** es mindestens drei Gehäuse (4) umfasst, denen jeweils ein Sensor (3) zugeordnet ist.

9. Paket nach Anspruch 7 und Anspruch 8, **dadurch gekennzeichnet, dass** der Rechner (7) eingerichtet ist, um einen Mittelwert der Verformungsdaten des verformbaren Abschnitts (32) jedes Sensors (3) zu ermitteln, um den auf der Anzeigevorrichtung (6) anzuzeigenden Gewichtswert zu generieren.

## Claims

1. A package (1) comprising a case (11) having a bottom (12), **characterized in that** the bottom (12) integrates a system (2) for measuring weight, the system (2) comprising:
- at least one sensor (3) for measuring weight having a fixing bracket (31) and a deformable portion (32) carried by the bracket (31);
- at least one casing (4) in which the sensor (3) is housed, the casing (4) comprising a female shell (41) to which the bracket (31) for fixing the sensor (3) is secured, and a male shell (42) slidably mounted in the female shell (41) and to which the deformable portion (32) of the sensor (3) is secured, the male shell (42) comprising at least one abutment (44) for driving the male shell (42) into the female shell (41), the male shell (42) protruding from an outer surface of the bottom (12) of the case (11).

2. The package according to claim 1, **characterized in that** the male shell (42) comprises two abutments (44) opposite to each other, each abutment (44) extending along a curved line.

3. The package according to the preceding claim, **characterized in that** the male shell (42) has at least one stud (45) for fixing, by at least one screw (5), the deformable portion (32) of the sensor (3), the stud (45) being located between the two abutments (44).

4. The package according to the preceding claim, **characterized in that** the female shell (41) has at least one aperture (414) located facing said at least one screw (5) fixing the deformable portion (32) of the sensor (3) on the stud (45) for fixing the male shell (42).

5. The package according to any one of the preceding claims, **characterized in that** the female shell (41) comprises two slots (413), opposite to each other, in each of which the bracket (31) for fixing the sensor (3) is placed.

6. The package according to any one of the preceding claims, **characterized in that** the female shell (41) has a peripheral edge (412) carrying lugs (415) protruding outwardly of the female shell (41).

7. The package according to any one of the preceding claims, **characterized in that** it comprises a display device (6) and a computer (7), the computer (7) being parameterized to transform a deformation data of the deformable portion (32) of the sensor (3) into a weight value to be displayed on the display device (6).

8. The package according to any one of the preceding claims, **characterized in that** it comprises at least three casings (4) to each of which a sensor (3) is associated.

9. The package according to claim 7 and claim 8, **characterized in that** the computer (7) is parameterized to make an average of the deformation data of the deformable portion (32) of each of the sensors (3) to generate the weight value to be displayed on the display device (6).
